# EUROPÄISCHE PATENTSCHRIFT

(11) **EP 3 516 360 B1**
(45) Veröffentlichungstag und Bekanntmachung des Hinweises auf die Patenterteilung: **04.11.2020**
(21) Anmeldenummer: 17768128.5
(22) Anmeldetag: 18.09.2017
(51) Int. Cl.: G01M 3/20, G01N 1/24

(54) **FÜLLSONDENAUFSATZ MIT LANGGESTRECKTEM GASLEITENDEM ELEMENT**
SNIFFER WITH ELONGATED GAS PERMEABLE ELEMENT
SNIFFER AVEC ÉLÉMENT PERMEABLE À GAZ ÉLARGIÉ

(30) Priorität: 19.09.2016 DE 102016217891
(43) Veröffentlichungstag der Anmeldung: 31.07.2019
(73) Patentinhaber: Inficon GmbH, 50968 Köln (DE)
(72) Erfinder: DECKER, Silvio, 50968 Köln (DE)
(74) Vertreter: dompatent von Kreisler Selting Werner - Partnerschaft von Patent- und Rechtsanwälten mbB
(86) Internationale Anmeldenummer: PCT/EP2017/073404
(87) Internationale Veröffentlichungsnummer: WO 2018/050879

(56) Entgegenhaltungen:
- WO-A1-2015/028336
- JP-A- 2010 060 410

## Beschreibung

Die Erfindung betrifft eine zum Ansaugen von Gas ausgebildete Schnüffelsonde eines Gasanalysators sowie einen Schnüffelaufsatz für eine derartige Schnüffelsonde.

Ein Gasanalysator ist zur Erzeugung eines Vakuums mit einer Vakuumpumpe versehen, um Gas in das Vakuum anzusaugen. Das angesaugte Gas wird einer Analyse unterzogen, um mindestens eine Komponente des angesaugten Gases zu identifizieren. Die Vakuumpumpe des Gasanalysators ist mit der Schnüffelsonde verbunden, typischerweise über einen langgestreckten, flexiblen Schlauch, um die Schnüffelsonde in dem gewünschten Bereich führen zu können. Das Gas wird durch die Ansaugöffnung der distal an der Schnüffelsonde vorgesehenen Schnüffelspitze entlang einer Mittelsenkrechten der Ansaugöffnung angesaugt. Derartige Gasanalysatoren werden typischerweise in der Lecksuche eingesetzt, wobei die Schnüffelsonde meist per Hand über einen auf ein mögliches Leck hin zu untersuchenden Bereich geführt wird. Beispielsweise kann die Schnüffelsonde über ein Testobjekt geführt werden, welches mit einem Prüfgas gegenüber der umgebenden Atmosphäre druckbeaufschlagt ist, um durch ein mögliches Leck austretendes Prüfgas zu erfassen.

Eine grundsätzliche Schwierigkeit bei der Schnüffellecksuche besteht darin, dass zur Erfassung eines Lecks bereits in großem Abstand herkömmlicherweise ein hoher Fluss des durch die Schnüffelsonde angesaugten Gasstroms angestrebt wird. Je größer der angesaugte Gasfluss ist, desto geringer ist jedoch die Konzentration des erfassten Prüfgases in dem angesaugten Gasstrom und desto geringer ist die Nachweisgrenze für das Prüfgas. Zudem können Luftströmungen quer zu der Ansaugrichtung der Schnüffelsonde dazu führen, dass ein Teil des aus einem Leck austretenden Prüfgases von der Schnüffelspitze fortgeführt wird und von dem Gasanalysator nicht erfasst wird. Dieser Effekt reduziert die Nachweisgrenze für das Prüfgas umso mehr, je größer der Abstand zwischen einem Leck und der Schnüffelspitze ist.

JP 2010 060410 A offenbart eine Schnüffelsonde eines Gasanalysators, deren Schnüffelspitze mit einer distalen Ansaugkappe versehen ist.

WO 2015/028336 A1 beschreibt eine Schnüffelsonde eines Gasanalysators mit einem distalen ersten Abschnitt mit geringem Durchmesser und einem proximalen zweiten Abschnitt mit größerem Durchmesser.

Der Erfindung liegt die Aufgabe zugrunde, eine verbesserte Schnüffelsonde und einen verbesserten Schnüffelaufsatz zu schaffen.

Die Erfindung wird gelöst durch die Merkmale der Ansprüche 1 und 2.

Die Schnüffelsonde ist mit mehreren langgestreckten, gasleitenden Elementen versehen. Alternativ ist ein Schnüffelaufsatz vorgesehen, der an der Schnüffelsonde anbringbar ist und mit dem langgestreckten Elemente versehen ist. Mit gasleitend ist in Bezug auf die gasleitenden Elementen gemeint, dass Luft- beziehungsweise Gasströmungen quer zur Öffnungsfläche der Ansaugöffnung, das heißt senkrecht zu der Mittelsenkrechten der Ansaugöffnung, durch die langgestreckten Elemente beeinträchtigt werden. So soll vermieden werden, dass derartige Querströmungen Prüfgas von der Ansaugöffnung fort tragen beziehungsweise daran hindern, in die Ansaugöffnung gesaugt zu werden. Die langgestreckten Elemente sind dabei im Wesentlichen parallel zu der Mittelsenkrechten der Ansaugöffnung angeordnet, entlang welcher das Gas angesaugt wird, so dass das Ansaugen des Gases durch die Ansaugöffnung entlang der Mittelsenkrechten so wenig wie möglich beeinträchtigt wird. Im Wesentlichen bedeutet hierbei in einem Winkelbereich von bis zu 20 Grad, bevorzugt bis zu 10 Grad und besonders bevorzugt bis zu 5 Grad gegenüber der Parallelen geneigt angeordnet. Querströmungen sollen bevorzugt stärker von den langgestreckten Elementen beeinträchtigt werden als Gasströmungen entlang der Mittelsenkrechten. Die langgestreckten Elemente können auch dazu dienen, Gasverwirbelungen zu reduzieren. Daraus resultiert der Vorteil, dass der Prüfgasanteil in dem angesaugten Gasstrom aufgrund der verminderten Querströmungen erhöht ist und die Nachweisgrenze zum Nachweis von Prüfgas in dem angesaugten Gasstrom reduziert ist.

Bei den langgestreckten Elementen handelt es sich um Elemente, deren Längserstreckung entlang der Mittelsenkrechten größer ist als deren Breite oder Tiefe quer zu der Mittelsenkrechten. Alternativ kann es sich um ein faserartiges, zylindrisches Element handeln. Beispielhaft kann dies eine Faser mit rundem Querschnitt sein. Erfindungsgemäß sind mehrere der langgestreckten Elemente der zuvor beschriebenen Art neben der Ansaugöffnung angeordnet, um so eine Barriere für Querströmungen zu bilden. Erfindungsgemäß sind die langgestreckten Elemente um die Ansaugöffnung ringförmig verteilt angeordnet. Dadurch werden Querströmungen aus jeder denkbaren Richtung quer zu der Mittelsenkrechten der Ansaugöffnung beeinträchtigt, während die Gasströmung in Längsrichtung entlang der Mittelsenkrechten nur geringfügig beeinträchtigt wird. Die langgestreckten Elemente sind vorzugsweise elastisch federnd ausgebildet. Im Fall langgestreckter Fasern resultiert somit eine pinselartige Struktur zur Unterbindung von Querströmungen und zur Leitung des Gasstroms entlang der Fasern.

Im Falle elastisch federnder langgestreckter Elemente kann dieses auch als Indikator dienen, um einen geeigneten Abstand zu der abgeschnüffelten Oberfläche des Testobjekts herzustellen und einzuhalten. Die über die Ansaugöffnung distal hinausragende Länge der langestreckten Elemente sollte dabei dem optimalen Abstand zwischen Ansaugöffnung und abzuschnüffelnder Oberfläche entsprechen. Bei Berührung der distalen Enden der langgestreckten Elemente mit der abgeschnüffelten Oberfläche bilden die langgestreckten Elemente einen haptisch spürbaren Widerstand.

Denkbar ist, dass an dem distalen Ende mindestens eines langgestreckten Elements ein berührungsempfindlicher Sensor vorgesehen ist, der bei Berührung mit der abzuschnüffelnden Oberfläche ein Signal generiert, dass angibt, dass die Schnüffelspitze den richtigen Abstand zu dem Prüfobjekt einhält. Das Signal kann auf bekannte Art beispielsweise elektronisch generiert werden und an dem Gasanalysator übermittelt werden.

Bei einer anderen Ausgestaltung ist denkbar, dass die langgestreckten gasleitenden Elemente aus einem gaspermeablen, beispielsweise schwammartigen Material bestehen. Vorteilhafterweise ist die Gaspermeabilität in Längsrichtung des langgestreckten Elements, das heißt in Gasansaugrichtung parallel zur Mittelsenkrechten der Ansaugöffnung, größer als quer zur Längsrichtung, um Querströmungen des Gases stärker zu beeinträchtigen als Längsströmungen. Das gaspermeable Material der langgestreckten Elemente kann die Ansaugöffnung bedecken, so dass das angesaugte Gas durch das Material hindurch angesaugt wird. In diesem Fall ist es besonders vorteilhaft, wenn die Gaspermeabilität in Längsrichtung größer als in Querrichtung ist.

Im Folgenden werden anhand der Figuren Ausführungsbeispiele der Erfindung näher erläutert. Es zeigen:
- Fig. 1: einen Längsschnitt durch einen Schnüffelaufsatz (erstes Ausführungsbeispiel),
- Fig. 2: eine Ansicht einer Schnüffelsonde mit dem Schnüffelaufsatz gemäß Fig. 1,
- Fig. 3: einen Längsschnitt durch eine Schnüffelsonde (zweites Ausführungsbeispiel) und
- Fig. 4: eine Ansicht der Schnüffelsonde gemäß Figur 3.

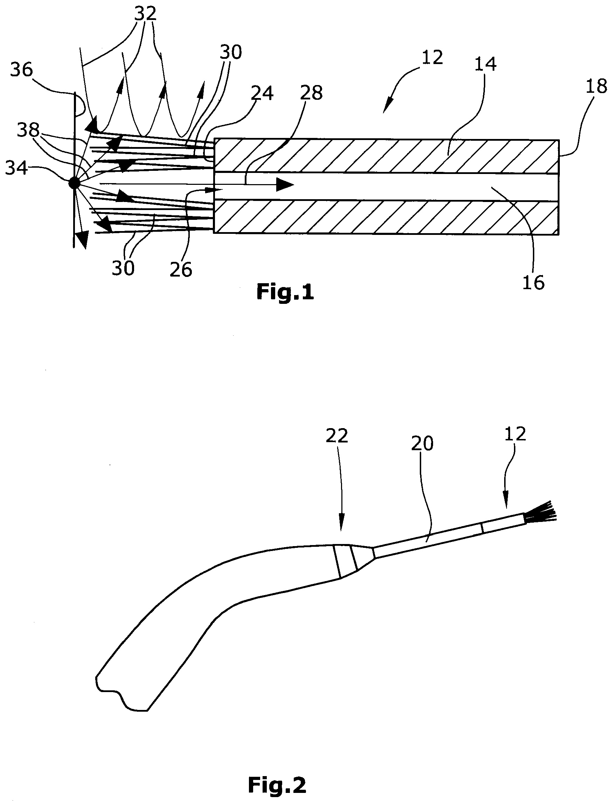

Der Schnüffelaufsatz 12 des ersten Ausführungsbeispiels weist ein zylindrisches Gehäuse 14 auf, das mit einem mittig durch das Gehäuse 14 hindurch verlaufenden Strömungskanal für die angesaugte Gasströmung versehen ist. Am proximalen, das heißt in Gasströmungsrichtung der angesaugten Gasströmung stromabwärtigen Ende 18 kann der Schnüffelaufsatz 12 auf die Schnüffelspitze 20 einer Schnüffelsonde 22, wie in Fig. 2 dargestellt, aufgesteckt werden. Hierzu können der Schnüffelaufsatz 12 und die Schnüffelsonde 22 mit in den Figuren nicht dargestellten, komplementär zueinander passenden zusammengreifenden Verbindungselementen versehen sein.

Am dem dem proximalen Ende 18 gegenüberliegenden distalen Ende 24 ist der Schnüffelaufsatz 12 mit einer in den Gasströmungskanal 16 mündenden Ansaugöffnung 26 versehen. Das Gas wird durch die Ansaugöffnung 26 zumindest zum überwiegenden Teil entlang der Mittelsenkrechten 28 angesaugt, das heißt in einer Ansaugrichtung, die parallel zu einer Geraden verläuft, die senkrecht zu der Fläche der Ansaugöffnung 26 angeordnet ist und durch den Mittelpunkt der Ansaugöffnung 26 verläuft.

Das distale Ende 24 ist mit mehreren faserartigen, langgestreckten Elementen 30 versehen, die in Form dünner Fasern nach Art eines Pinsels von dem distalen Ende 24 abstehen und in distale Richtung ragen.

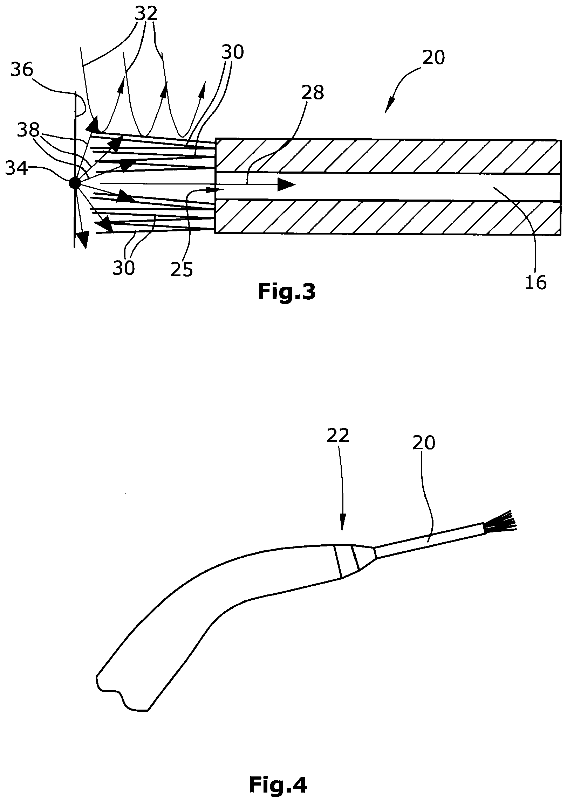

Während das erste Ausführungsbeispiel gemäß den Figuren 1 und 2 darin besteht, die Schnüffelspitze 20 einer Schnüffelsonde 22 mit einem die langgestreckten Elemente aufweisenden Schnüffelaufsatz 12 zu versehen, basiert das zweite Ausführungsbeispiel gemäß den Figuren 3 und 4 auf dem Gedanken, die langgestreckten Elemente direkt an der Schnüffelspitze 20 anzubringen. Bei dem ersten Ausführungsbeispiel sind mehrere langgestreckte Elemente im Bereich der Ansaugöffnung 26 des Schnüffelaufsatzes 12 angeordnet und ragen über diese Ansaugöffnung 26 hinaus. Bei dem zweiten Ausführungsbeispiel sind die langgestreckten Elemente im Bereich der Ansaugöffnung 25 der Schnüffelspitze 20 angeordnet und ragen distal über diese hinaus.

Die langgestreckten Elemente 30 bilden eine ringförmig um die Ansaugöffnung 26 beziehungsweise 25 herum verteilt angeordnete Barriere für Querströmungen 32, die quer oder annähernd quer zu der Mittelsenkrechten 28 verlaufen. Die Gaspermeabilität dieser Barriere ist in Längsrichtung entlang der Mittelsenkrechten 28 erheblich größer und bevorzugt maximal und für Querströmungen 32, die quer zu der Mittelsenkrechten 28 verlaufen, deutlich kleiner und bevorzugt vernachlässigbar gering.

In den Figuren 1 und 3 ist schematisch ein Leck 34 in der abzuschnüffelnden Oberfläche 36 dargestellt, wobei die sternförmig angeordneten Pfeile 38 das aus dem Leck 34 ausströmende Prüfgas andeuten. Die langgestreckten Elemente 30 vermeiden, dass Gasquerströmungen 32 das austretende Prüfgas 38 von der Ansaugöffnung 26 forttragen. Wenn die langgestreckten Elemente 30 die abzuschnüffelnde Oberfläche 36 im Bereich des Lecks 34 berühren, wird das aus dem Leck 34 austretende Gas 38 in Längsrichtung entlang der Mittelsenkrechten 28 zu der Ansaugöffnung 25 beziehungsweise 26 hingeführt und gelangt von dort durch den Gasströmungskanal 16 zu dem in den Figuren nicht dargestellten Gasanalysator, um dort ausgewertet zu werden.

## Patentansprüche

1. Schnüffelsonde (22) eines Gasanalysators, wobei die Schnüffelsonde (22) zum Ansaugen von Gas ausgebildet und mit dem Gasanalysator verbindbar ist und wobei die Schnüffelsonde (22) eine mit einer Ansaugöffnung (25) versehene Schnüffelspitze (20) derart aufweist, dass Gas entlang einer Mittelsenkrechten (28) der Ansaugöffnung durch die Ansaugöffnung hindurch angesaugt wird, wobei die Schnüffelspitze (20) mindestens ein in einem Winkelbereich von bis zu 20 Grad gegenüber der Mittelsenkrechten (28) geneigt angeordnetes und distal über die Ansaugöffnung (25) hinausragendes langgestrecktes gasleitendes Element (30) aufweist,
**dadurch gekennzeichnet,**
**dass** mehrere langgestreckte Elemente (30) ringförmig um die Ansaugöffnung (25) herum angeordnet sind, um so eine Barriere für Querströmungen zu ermöglichen.

2. Kombination aus einer zum Ansaugen von Gas ausgebildeten Schnüffelsonde (22), die mit einem Gasanalysator verbindbar ist und eine mit einer Ansaugöffnung (25) versehene Schnüffelspitze (20) aufweist, und einem Schnüffelaufsatz (12) zur Befestigung an der Schnüffelspitze (20), wobei der Schnüffelaufsatz (12) eine mit der Ansaugöffnung (25) der Schnüffelspitze (20) in Deckung bringbare Ansaugöffnung (26) derart aufweist, dass Gas entlang einer Mittelsenkrechten (28) beider Ansaugöffnungen (25, 26) ansaugbar ist, wobei der Schnüffelaufsatz (12) mindestens ein in einem Winkelbereich von bis zu 20 Grad gegenüber der Mittelsenkrechten (28) geneigt angeordnetes und distal über die Ansaugöffnung (26) des Schnüffelaufsatzes (12) hinausragendes langgestrecktes gasleitendes Element (30) aufweist
**dadurch gekennzeichnet,**
**dass** mehrere langgestreckte Elemente (30) ringförmig um die Ansaugöffnung (26) des Schnüffelaufsatzes (12) herum angeordnet sind, um so eine Barriere für Querströmungen zu ermöglichen.

3. Schnüffelsonde (22) nach Anspruch 1 oder Schnüffelaufsatz (12) nach Anspruch 2, **dadurch gekennzeichnet, dass** das langgestreckte Element (30) elastisch ist.

4. Schnüffelsonde (22) oder Schnüffelaufsatz (12) nach einem der Ansprüche 1 bis 3, **dadurch gekennzeichnet, dass** die langgestreckten Elemente (30) ein die Ansaugöffnung bedeckendes oder neben der Ansaugöffnung angeordnetes gaspermeables Material aufweisen.

5. Schnüffelsonde (22) oder Schnüffelaufsatz (12) nach einem der vorhergehenden Ansprüche, **dadurch gekennzeichnet, dass** mehrere langgestreckte Elemente (30) in Form von Fasern nach Art eines Pinsels vorgesehen sind.

## Claims

1. A sniffer probe (22) of a gas analyzer, wherein the sniffer probe (22) is configured to draw in gas and is adapted to be connected to the gas analyzer, and wherein the sniffer probe (22) comprises a sniffer tip (20) having an intake opening (25), such that gas is drawn in through the intake opening along a perpendicular bisector (28) of the intake opening, wherein the sniffer tip (20) comprises at least one elongated gas-conductive element (30) arranged inclined in an angle range of up to 20 degrees opposite the perpendicular bisector (28) and protruding distally beyond the intake opening (25),
**characterized in that**
a plurality of elongated elements (30) is arranged annularly around the intake opening (25) to allow for a barrier for transversal flows.

2. A combination of a sniffer probe (22) configured to draw in gas, which is adapted to be connected to a gas analyzer and comprises a sniffer tip (20) having an intake opening (25), and a sniffer attachment (12) to be mounted to the sniffer tip (20), wherein the sniffer attachment (12) comprises an intake opening (26) adapted to be aligned with the intake opening (25) of the sniffer tip (20), such that gas can be drawn in along a perpendicular bisector (28) of both intake openings (25, 26), wherein the sniffer attachment (12) comprises at least one elongated gas-conducting element (30) arranged inclined in an angle range of up to 20 degrees opposite the perpendicular bisector (28) and protruding distally beyond the intake opening (26) of the sniffer attachment (12),
**characterized in that**
a plurality of elongated elements (30) is arranged annularly around the intake opening (26) of the sniffer attachment (12) to allow for a barrier for transversal flows.

3. The sniffer probe (22) of claim 1 or the sniffer attachment (12) of claim 2, **characterized in that** the elongated element (30) is elastic.

4. The sniffer probe (22) or the sniffer attachment (12) of one of claims 1 to 3, **characterized in that** the elongated elements (30) comprise a gas-permeable material covering the intake opening or arranged adjacent the intake opening.

5. The sniffer probe (22) or the sniffer attachment (12) of one of the preceding claims, **characterized in that** a plurality of elongated elements (30) in the form of fibers are provided in the manner of a paintbrush.

## Revendications

1. Sonde de reniflement (22) d'un analyseur de gaz, dans laquelle la sonde de reniflement (22) est réalisée pour l'aspiration de gaz et peut être raccordée à l'analyseur de gaz et dans laquelle la sonde de reniflement (22) comporte un bec de reniflement (20) prévu doté d'une ouverture d'aspiration (25) de sorte que le gaz est aspiré à travers l'ouverture d'aspiration le long d'un axe médian vertical (28) de l'ouverture d'aspiration, dans laquelle le bec de reniflement (20) comporte au moins un élément allongé poreux au gaz (30), dépassant distalement au-dessus de l'ouverture d'aspiration (25) et agencé avec une inclinaison allant jusqu'à 20° par rapport à l'axe médian vertical (28),
**caractérisée en ce que** plusieurs éléments allongés (30) sont agencés en anneau autour de l'ouverture d'aspiration (25), afin de créer une barrière pour les flux transversaux.

2. Combinaison d'une sonde de reniflement (22) réalisée pour l'aspiration de gaz, laquelle peut être raccordée à un analyseur de gaz et comporte un bec de reniflement (20) prévu doté d'une ouverture d'aspiration (25), et d'un embout de reniflement (12) destiné à être fixé sur le bec de reniflement (20), dans laquelle l'embout de reniflement (12) comporte une ouverture d'aspiration (26) pouvant être amenée en recouvrement avec l'ouverture d'aspiration (25) du bec de reniflement (20), de telle sorte que le gaz peut être aspiré le long d'un axe médian vertical (28) des deux ouvertures d'aspiration (25, 26), dans laquelle l'embout de reniflement (12) comporte au moins un élément allongé poreux au gaz (30), dépassant distalement au-dessus de l'ouverture d'aspiration (26) de l'embout de reniflement (12) et agencé avec une inclinaison allant jusqu'à 20° par rapport à l'axe médian vertical (28)
**caractérisée en ce que** plusieurs éléments allongés (30) sont agencés en anneau autour de l'ouverture d'aspiration (26) de l'embout de reniflement (12), afin de créer une barrière pour les flux transversaux.

3. Sonde de reniflement (22) selon la revendication 1 ou embout de reniflement (12) selon la revendication 2, caractérisé(e) en ce que l'élément allongé (30) est élastique.

4. Sonde de reniflement (22) ou embout de reniflement (12) selon l'une des revendications 1 à 3, caractérisé(e) en ce que les éléments allongés (30) comportent un matériau perméable au gaz recouvrant l'ouverture d'aspiration ou agencé à côté de l'ouverture d'aspiration.

5. Sonde de reniflement (22) ou embout de reniflement (12) selon l'une des revendications précédentes, caractérisé(e) en ce que plusieurs éléments allongés (30) sont prévus sous forme de fibres selon le type d'un pinceau.
